# NEW EUROPEAN PATENT SPECIFICATION

(11) **EP 0 827 898 B2**
(45) Date of publication and mention of the opposition decision: **21.12.2005**
(45) Mention of the grant of the patent: 29.01.2003
(21) Application number: 97306639.2
(22) Date of filing: 29.08.1997
(51) Int. Cl.: B62D 59/04

(54) **Apparatus for moving vehicles such as trailers and trolleys**
Vorrichtung zum Bewegen von Fahrzeugen wie Anhänger und Transportwagen
Dispositif pour déplacer des véhicules tels que remorques et chariots

(30) Priority: 04.09.1996 GB 9618643
(43) Date of publication of application: 11.03.1998
(73) Proprietor: Carver plc, Walsall, West Midlands WS9 8QD (GB)
(72) Inventor: Carver, John, Longhope, Gloucester GL17 9PA (GB)
(74) Representative: Croft, Michael John

(56) References cited:
- EP-A- 0 403 978
- DE-A- 876 808
- DE-A- 4 023 691
- US-A- 3 826 324
- US-A- 4 541 051
- US-A- 4 596 300
- US-A- 5 490 755

## Description

The present invention concerns apparatus for moving vehicles such as trailer caravans, trolleys, carts and like non-motorised wheeled vehicles.

It is not always possible to , move non-motorised vehicles, hereafter generally referred to as "trailers", by means of a towing vehicle, and moving such trailers manually can be extremely laborious and problematical especially on uneven or inclined surfaces.

Various forms of apparatus have been proposed for manoeuvring trailers without the use of a towing vehicle, such apparatus generally comprising drive motors arranged to drive the wheels of a trailer independently and in the same or opposite directions.

More specifically, it is known, in particular from US 3826324, to provide an apparatus for moving a trailer which comprises a pair of drive units for driving, respectively, an offside wheel and a nearside wheel of the trailer, each drive unit being carried by a carrier which is mounted on a mounting fixed or adapted to be fixed to the trailer, and having a friction drive roller and an electric motor for driving the roller, the apparatus being provided with an electrical control system which includes a remote control unit by means of which it is operable to energise the motors individually in common and opposite polarities, and actuator means operable to move the friction drive rollers into and out of frictional driving engagement with tyres fitted to the trailer wheels (the terms "offside wheel" and "nearside wheel" used herein refer, respectively, to a wheel disposed at the side of the trailer nearer the centre of the road and to a wheel disposed at the opposite side of the trailer nearer the kerb).

In the arrangement disclosed in US 3826324 the drive units with their electric motors and drive rollers are fixed to the respective ends of a turnable transverse bar which project beyond mountings for the bar on the trailer in cantilever fashion. The bar is turnable by means of a bell crank connected by cables to an operating mechanism and the rotational axes of the drive units are parallel to and offset from the axis of the bar so that turning of the bar moves the rollers into and out of engagement with the tyres of the trailer wheels.

The object of the present invention is to provide an apparatus for moving a trailer which, compared in particular with the arrangement of US 3826324, is designed to ensure a more positive engagement of the drive rollers with the trailer tyres and is more compact. This object has been solved by the features of claim 1.

In order to cater for a wide variety of suspension geometrics and dimensions of trailers and caravans, the mounting of each drive unit preferably comprises a pivot carrier arrangement, and the carrier and the actuator mechanism of the drive unit are pivotally connected to the pivot carrier arrangement and to each other so that operation of the mechanism can swing the friction drive member generally fore and aft and pivotal movement of the pivot carrier arrangement can swing the friction drive member generally up and down.

The mountings for the drive units preferably comprise a transverse member having the drive units mounted or mountable on its respective ends. Each pivot carrier arrangement preferably comprises a first pivot carrier and a second pivot carrier arcuately offset from the first pivot carrier. Each drive unit preferably has a sub-mounting which carries the respective motor, a reduction gear and the friction drive member, and which is preferably pivotally connected to the first pivot carrier. The mechanism of each drive unit preferably comprises an over-centre linkage which has one end part thereof pivotally connected to the sub-mounting, and the other end part thereof connected by a pivotal link to the second pivot carrier.

A part of the over-centre linkage is preferably adjustable for length.

The transverse member is preferably adjustable in length to vary the spacing of the drive units. Clamping means are preferably provided to clamp the transverse member to the chassis of the trailer.

The pivot carrier arrangements are preferably fixed to the transverse member for rotation therewith when the clamping means is released.

Each drive unit may have a transmission system for transmitting drive from the electric motor of the unit to the associated drive roller which provides a "brake" condition in which the transmission is effective but the motor is de-energised. The transmission system may include a brake effective in the "brake" condition, or a worm gear to halt the roller or to allow the roller to rotate extremely slowly against a high transmission and motor resistance in the "brake" condition.

The invention will be described further, by way of example, with reference to the accompanying diagrammatic drawings, wherein:-
FIGURE 1 shows a drive unit of apparatus of the invention in end elevation;
FIGURE 2 shows the drive unit in side elevation in an in use position engaging a wheel of a trailer;
FIGURE 3 is an electrical circuit diagram of an electric control system of the apparatus.

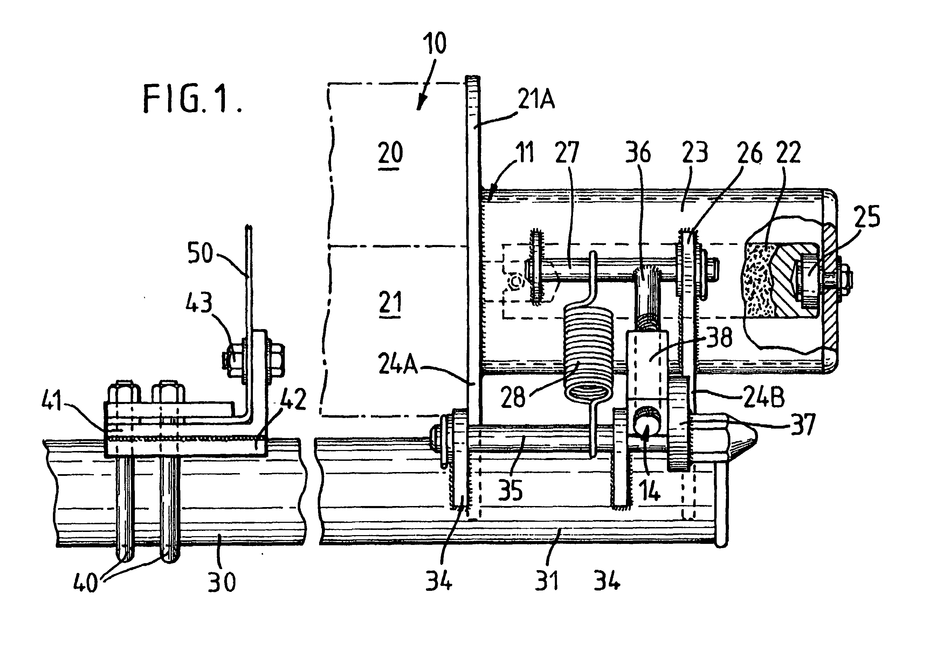

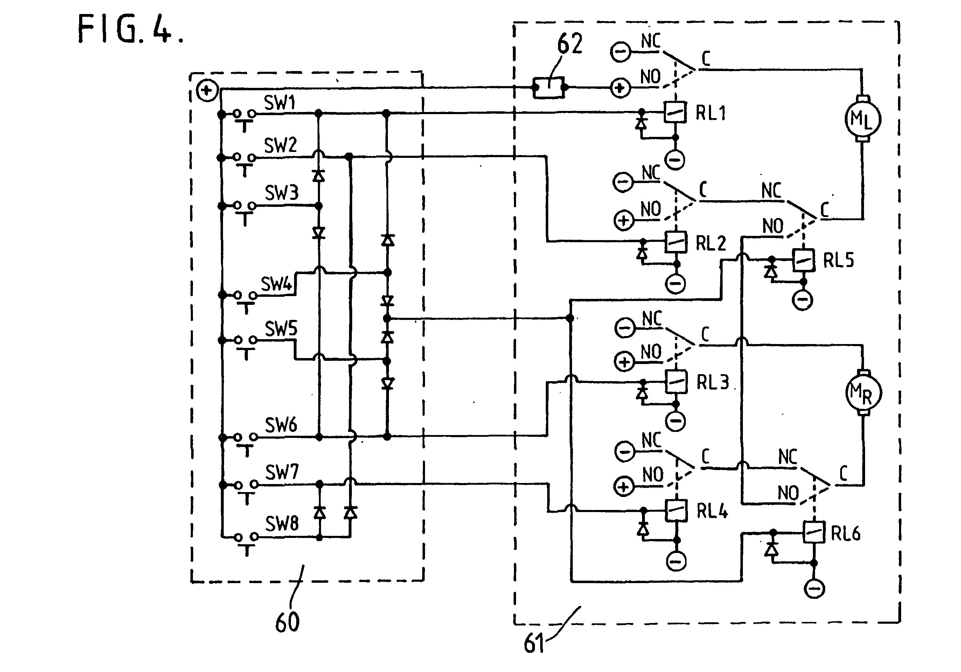

The apparatus comprises a pair of drive units 10, of which only one is shown and the other is a mirror image thereof, which are supported by a mounting arrangement 11 for securing the drive units to a chassis of a trailer (FIGURES 1 to 3), and an electrical control system (FIGURE 4).

Each drive unit 10 includes a 12 volt DC electric motor 20 connected to a reduction gear box 21, of a transmission system, to drive a friction drive roller 22 partially surrounded by a part-cylindrical shield 23 welded to a gear box plate 21A. The shield 23 and plate 21A form parts of a sub-mounting provided with an extension 24A of the gear box plate and a bracket 24B welded to the shield 23. The shield 23 carries bearings 25 supporting the roller 22. The shield 23 also carries a pair of brackets 26 which support a pin 27.

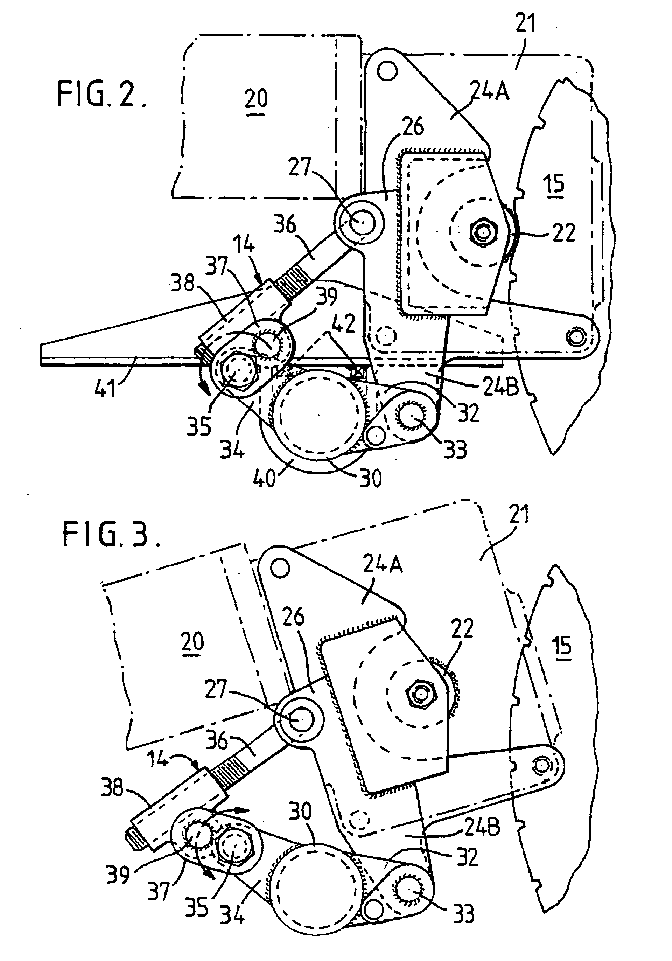

The mounting arrangement 11 includes a transverse member 30, opposite end portions 31 of which are provided with pivot carrier arrangements. Each pivot carrier arrangement comprises a pair of first pivot carriers 32 (FIGURE 2) which carry a first pivot 33 which connects the sub-mounting pivotally to said carriers 32; and comprises a pair of second pivot carriers 34 which carry an actuating shaft 35 of a bistable mechanism 14. This mechanism includes a link 37 which is fixedly secured at one end to the shaft 35, and pivotally by a pin 39 at the other end to an internally threaded male part 38 in which a threaded portion of a push rod 36 engages, and the end of the rod 36 is welded to the pin 27.

The drive unit 10 is biased away from the wheel 15 by a tension spring 28 (FIGURE 1) connected between the pin 27 and the shaft 35.

The mounting arrangement 11 further includes U-bolt clamping means 40 and a pair of chassis reinforcing plates 41. Each plate 41 is of L-shaped cross section, and a pair of elongate abutments 42 are welded across the underside of the plate 41 to provide a seating for the transverse member. The plates 41 are apertured to receive the U-bolts 40 for clamping the transverse member 30 in the seating.

In use, the plates 41 are located at equal distances from the common axis of the wheels 15 to the longitudinal members 50 of the chassis of the trailer, optionally by means of bolts 43 or clamping tools; and the transverse member 30 is then located in the seatings by means of the clamping means 40 so as to be parallel with said common axis. The drive units 10 with the bistable mechanism 14 fitted thereto, are connected to the pivot carrier means by insertion of the pivots 33. Before the shaft 35 is fitted the drive units are swung so that the friction drive rollers 22 rest on the tyres of the wheels and:-
(a) by rotation of the transverse member 30, the drive rollers 22 are shifted up or down until they are aligned so that their axes lie in a plane passing through the points of contact with the tyres and said common axis, whereupon the U-bolts are fully tightened, and
(b) by rotation of the male parts 38 on the push rods 36 the effective length, i.e. the distance between the axes of the pins 27 and 39, of each linkage is sufficient to effect a predetermined compression of each tyre when the shaft 35 is fitted and rotated until stopped in an overcentre limit position (FIGURE 2) in which the predetermined compression is achieved.

Thereafter, the springs 28 are fitted and the shafts 35 are rotated (by application of a spanner or tool to a hexagonal head on each shaft 35), to swing the drive units away from the wheels and beyond the transient position shown in FIGURE 3, until stopped in a second overcentre limit position (not shown) in which they are retained by the springs.

As is apparent from the drawings, particularly FIGURE 1, the overcentre linkage 37 and 36,38 of the bistable mechanism 14 of each drive unit acts to apply a force between a part of the fixed transverse member 30 (specifically the portion of the shaft 35 to which the link 37 is secured) and a part of the sub-mounting 21A,23 (specifically the portion of the pin 27 to which the rod 36 is welded) in order to press the friction drive roller 22 into engagement with the tyre for driving the trailer, the said parts being disposed beside a middle portion of the roller located between its ends.

The electrical control system comprises a remote hand control unit 60 connected by a cable to the trailer to actuate a system 61 of relays RL₁ to RL₆ which control the motors 10 designated ML (left motor) and MR (right motor) in FIGURE 4. The unit 60 comprises switches SW1 to SW8 which are monostable "off" and manually actuable to "on", cross-feed blocking diodes, and with a positive feed from a protector 62 such as a low amperage fuse.

The system is organised for negative earth, and all the relays are monostable with their "normal-closed" contacts earthed (negative feed) so that the motors are normally earthed; and is powered from a 12 volt battery which may be carried by the trailer.
The system provides the following functions according to which one of the switches is closed, as follows:-

| | |
|---|---|
| SW1 | Forward turn clockwise. RL1 energised to give forward positive feed for forward rotation of ML. |
| SW2 | Reverse turn anticlockwise. RL2 energised to give reverse positive feed for reverse rotation of ML. |
| SW3 | Forward drive. RL1 and RL3 both energised for forward rotation of ML and MR with parallel positive feeds. |
| SW4 | Spin clockwise. RL1, RL5 and RL6 all energised to put ML and MR in series with the positive feed being forwards to ML and reverse to MR. |
| SW5 | Spin anticlockwise. RL3, RL5, and RL6 all energised to put ML and MR in series with the positive feed being forward to MR and reverse to ML. |
| SW6 | Forward turn anticlockwise. RL3 energised to give forward positive feed to MR. |
| SW7 | Reverse turn clockwise. RL4 energised to give reverse positive feed to MR. |
| SW8 | Reverse turn clockwise. RL4 and RL2 both energised to give parallel reverse positive feeds to M R and ML. |

In normal use, the trailer can be driven forwards and steered using SW1 to SW3 and driven rearwards and steered using SW6 to SW8, and the motor power and reduction gear ratios are chosen to give a slow walking speed, so that the operator of the unit 60 can keep pace with the trailer.

The spin functions controlled by SW4 and SW5 are particularly useful in order to enable the trailer to be manoeuvred finely e.g. to move the towing coupling on the trailer transversely by small amounts into alignment with a towing member on a tow vehicle. Putting the motors in series greatly reduces the rates at which the wheels are driven.

When all switches SW1 to SW8 are "off", both motors are de-energised and the apparatus is in a "brake" condition in which the friction drive rollers are restrained against rotation by the drive units 10. Each reduction gear box 21 may be of a worm-gear form which prevents rotation of the motor by torque applied to the friction drive roller by the wheel, or of a form which (in combination with the motor) offers a high resistance to wheel induced rotation of the motor.

The latter form is particularly useful for braked trailers, because it permits the trailer to be allowed to creep slowly down a gradient before being halted by the trailer brakes.

As well as being particularly simple and effective to use, the apparatus is equally simple to adjust for tyre wear or replacement by withdrawing the shaft 35 to disengage the link 37 from the male part 38 so that the latter can be rotated on the threaded push rod 36 to lengthen or shorten the effective length of the linkage to restore the predetermined compression.

The invention is not confined to details of the foregoing examples and many variations, modifications and mechanical equivalents of the parts described are possible within the scope of the invention.

For example, the transverse member 30 is preferably adjustable for length to space apart the drive units according to the track width of the trailer.

For example the trailer may be a cart, trolley or other (e.g. non-motorised) vehicle usually propelled by externally applied traction, having the apparatus for low speed, e.g. up to 8 kph, manoeuvring of the vehicle by selective manually controlled differential drive to wheels of the vehicle. Such wheels will usually be non-steered wheels, but in some cases, e.g. the case of trailers having a plurality of axles of which a leading axle is connected to a draw bar or A-frame by which it (or its wheels) are caused to track a towing vehicle the apparatus may be applied to drive "steered" wheels e.g. the wheels of such a passively steered or slave-tracking axle.

## Claims

1. Apparatus for moving a trailer comprising a pair of drive units (10) for driving, respectively, an offside wheel and a nearside wheel of the trailer, each drive unit being carried by a carrier (21 A,23) which is mounted on a mounting (30) fixed or adapted to be fixed to the trailer, and having a friction drive roller (22) and an electric motor (20) for driving the roller, the apparatus being provided with an electrical control system which includes a remote control unit (60) by means of which it is operable to energise the motors (20) individually in common and opposite polarities, and actuator means operable to move the friction drive rollers (22) into and out of frictional driving engagement with tyres fitted to the trailer wheels, **characterised in that** the drive units are provided, respectively, with two mechanisms (14) constituting the said actuator means, each mechanism being operable to move the associated carrier (21A,23) and with it the associated drive unit (10) relative to its fixed mounting (30) between a position in which the mechanism (14) holds the associated drive roller (22) out of engagement with the tyre of the associated trailer wheel and a position in which it holds the drive roller in engagement with the trailer wheel tyre by applying a force between a part of its fixed mounting (30) and a part of its carrier (21A,23) which are disposed beside a middle portion of the roller located between its ends, and the mechanism (14) of each drive unit comprises an over-centre linkage (37,38,36) operatively connected between the said carrier (21A,23) of the unit and the fixed mounting (30) of the unit.

2. Apparatus as claimed in Claim 1 wherein the trailer comprises a chassis and each of said wheels and said actuator means is provided at a position which is outwards of the chassis.

3. Apparatus as claimed in Claim 1 or 2 wherein the mounting (30) of each drive unit (10) comprises a pivot carrier arrangement (32,34), the carrier (21A,23) and the actuator mechanism (14) of the drive unit being pivotally connected to the pivot carrier arrangement and to each other so that operation of the mechanism can swing the friction drive member (22) generally fore and aft and pivotal movement of the pivot carrier arrangement can swing the friction drive member (22) generally up and down.

4. Apparatus as claimed in Claim 1, 2 or 3 wherein the mountings for the drive units (10) comprise a transverse member (30) which has the drive units mounted or mountable on its respective ends.

5. Apparatus as claimed in Claim 4 when dependent on Claim 3 wherein each pivot carrier arrangement comprises a first pivot carrier (32) and a second pivot carrier (34) arcuately offset from the first pivot carrier.

6. Apparatus as claimed in Claim 5 wherein each drive unit (10) has a sub-mounting (21A,23) which carries the respective motor (20), a reduction gear box (21) and the friction drive roller (22) of the unit, and which is pivotally connected to the first pivot carrier (32).

7. Apparatus as claimed in Claim 5 or 6 wherein the mechanism (14) of each drive unit comprises an over-centre linkage (37,38,36) which has one end part thereof (38,36) pivotally connected to the sub-mounting (21A,23) and the other end part thereof (37) connected by a pivotal link to the second pivot carrier (34).

8. Apparatus as claimed in Claim 7 wherein a part of the over-centre linkage (37,38,36) is adjustable for length.

9. Apparatus as claimed in any one of the preceding claims wherein each drive unit (10) is biased away from the associated trailer wheel by a spring (28).

10. Apparatus as claimed in any one of Claims 4 to 8 wherein the transverse member (30) is adjustable in length to vary the spacing of the drive units (10).

11. Apparatus as claimed in any one of Claims 4 to 8 or Claim 10 wherein clamping means (40) are provided to clamp the transverse member (30) to the chassis of the trailer.

12. Apparatus as claimed in any one of Claims 4 to 8 or Claim 10 or 11 wherein the pivot carrier arrangements (32,34) are fixed to the transverse member (30) for rotation therewith when the clamping means (40) is released.

13. Apparatus as claimed in any one of the preceding claims wherein each drive unit (10) has a transmission system for transmitting drive from the electric motor (20) of the unit to the associated drive roller (22), this system providing a "brake" condition in which the transmission is effective but the motor is de-energised.

14. Apparatus as claimed in Claim 13 wherein the transmission system includes a brake effective in the "brake" condition, or a worm gear to halt the roller (22) orto allow the rollerto rotate extremely slowly against a high transmission and motor resistance in the "brake" condition.

15. A trailer, cart, trolley or other non-motorised vehicle usually propelled by externally applied traction, having an apparatus as claimed in any one of the preceding claims for manoeuvring of the vehicle by selective manually controlled differential drive to wheels of the vehicle.

## Patentansprüche

1. Vorrichtung zum Bewegen eines Anhängers, welche ein Paar Antriebseinheiten (10) zum Antreiben jeweils eines abseitigen Rades und eines nahseitigen Rades des Anhängers aufweist, wobei jede Antriebseinheit mittels eines Trägers (21A, 23) gehalten ist, der an einer Halterung (30) angebracht ist, die an dem Anhänger fixiert oder derart angepasst ist, dass sie an dem Anhänger fixierbar ist, und eine Reibantriebsrolle (22) sowie einen Elektromotor (20) zum Antreiben der Rolle aufweist, wobei die Vorrichtung mit einem elektrischen Steuersystem versehen ist, das eine Fernbedienungseinheit (60), mittels der es möglich ist, die Motoren (20) einzeln mit gemeinsamen und entgegengesetzten Polaritäten unter Strom zu setzen, und das eine Betätigungseinrichtung aufweist, die zum Bewegen der Reibantriebsrollen (22) in einen Reibantriebseingriff mit an den Anhängerrädem vorgesehenen Reifen und aus einem solchen Eingriff heraus betätigbar ist, **dadurch gekennzeichnet, dass** die Antriebseinheiten jeweils mit zwei, die Betätigungseinrichtung bildenden Mechanismen (14) versehen sind, wobei jeder Mechanismus zum Bewegen des zugehörigen Trägers (21A, 23) und mit diesem der zugehörigen Antriebseinheit (10) relativ zu seiner fixierten Halterung (30) zwischen einer Position, in der der Mechanismus (14) die zugehörige Antriebsrolle (22) außerhalb eines Eingriffs mit dem Reifen des zugehörigen Anhängerrades hält, und einer Position betätigbar ist, in der dieser die Antriebsrolle in Eingriff mit dem Reifen des Anhängerrades hält, indem eine Kraft zwischen einem Teil seiner fixierten Halterung (30) und einem Teil seines Trägers (21A, 23) aufgebracht wird, die neben einem mittleren Abschnitt der Rolle angeordnet sind, welcher zwischen deren Enden positioniert ist, wobei der Mechanismus (14) jeder Antriebseinheit ein Sprunggestänge (37, 38, 36) aufweist, das betriebsmäßig zwischen den Träger (21A, 23) der Einheit und die fixierte Halterung (30) der Einheit geschaltet ist.

2. Vorrichtung nach Anspruch 1, **dadurch gekennzeichnet, dass** der Anhänger ein Chassis aufweist und jedes Rad sowie die Betätigungseinrichtung an einer Position zur Verfügung gestellt ist, welche sich außerhalb des Chassis befindet.

3. Vorrichtung nach Anspruch 1 oder 2, **dadurch gekennzeichnet, dass** die Halterung (30) jeder Antriebseinheit (10) eine Schwenkträgeranordnung (32, 34) aufweist wobei der Träger (21A, 23) und der Betätigungsmechanismus (14) der Antriebseinheit schwenkbar mit der Schwenkträgeranordnung und miteinander verbunden sind, so dass ein Betätigen des Mechanismus den Reibantriebskörper (22) im Wesentlichen nach vorne und nach hinten schwingt und die Schwenkbewegung der Schwenkträgeranordnung den Reibantriebskörper (22) im Wesentlichen hoch und herunter schwingt.

4. Vorrichtung nach Anspruch 1, 2 oder 3, **dadurch gekennzeichnet, dass** die Halterungen für die Antriebseinheiten (10) einen Querkörper (30) aufweisen, wobei die Antriebseinheiten an den jeweiligen Enden des Querkörpers angebracht oder anbringbar sind.

5. Vorrichtung nach Anspruch 4 sofern abhängig von Anspruch 3, **dadurch gekennzeichnet, dass** jede Schwenkträgeranordnung einen ersten Schwenkträger (32) und einen zweiten Schwenkträger (34) aufweist, welcher bogenförmig zu dem ersten Schwenkträger versetzt ist.

6. Vorrichtung nach Anspruch 5, **dadurch gekennzeichnet, dass** jede Antriebseinheit (10) eine Nebenhalterung (21A, 23) hat, welche den jeweiligen Motor (20), ein Untersetzungsgetriebe (21) und die Reibantriebsrolle (22) der Einheit trägt und welche schwenkbar mit dem ersten Schwenkträger (32) verbunden ist.

7. Vorrichtung nach Anspruch 5 oder 6, **dadurch gekennzeichnet, dass** der Mechanismus (14) jeder Antriebseinheit ein Sprunggestänge (37, 38, 36) aufweist, deren eines Endteil (38, 36) schwenkbar mit der Nebenhalterung (21A, 23) und deren anderes Endteil (37) über ein Drehgelenk mit dem zweiten Schwenkträger (34) schwenkbar verbunden ist.

8. Vorrichtung nach Anspruch 7, **dadurch gekennzeichnet, dass** ein Teil des Sprunggestänges (37, 38, 36) längenmäßig einstellbar ist.

9. Vorrichtung nach einem der vorhergehenden Ansprüche, **dadurch gekennzeichnet, dass** jede Antriebseinheit (10) weg von dem zugehörigen Anhängerrad durch eine Feder (28) vorgespannt ist.

10. Vorrichtung nach einem der Ansprüche 4 bis 8, **dadurch gekennzeichnet, dass** der Querkörper (30) in seiner Länge einstellbar ist, um den Abstand der Antriebseinheiten (10) zu verändern.

11. Vorrichtung nach einem der Ansprüche 4 bis 8 oder nach Anspruch 10, **dadurch gekennzeichnet, dass** Klemmeinrichtungen (40) vorgesehen sind, um den Querkörper (30) an dem Chassis des Anhängers festzuklemmen.

12. Vorrichtung nach einem der Ansprüche 4 bis 8 oder nach Anspruch 10 oder 11, **dadurch gekennzeichnet, dass** die Schwenkträgeranordnungen (32, 34) an dem Querkörper (30) befestigt sind und sich zusammen mit diesem drehen, wenn die Klemmeinrichtung (40) freigegeben ist.

13. Vorrichtung nach einem der vorhergehenden Ansprüche, **dadurch gekennzeichnet, dass** jede Antriebseinheit (10) ein Übertragungssystem zum Übertragen des Antriebs von dem Elektromotor (20) der Einheit zu der zugehörigen Antriebsrolle (22) hat, wobei dieses System einen "Brems"-Zustand bereitstellt, in dem die Übertragung wirksam, jedoch der Motor abgeschaltet ist.

14. Vorrichtung nach Anspruch 13, **dadurch gekennzeichnet, dass** das Übertragungssystem eine in dem "Brems"-Zustand wirksame Bremse oder ein Schneckengetriebe aufweist, um die Rolle (22) zu stoppen oder der Rolle zu gestatten, sich extrem langsam gegen einen hohen Übertragungs- und Motorwiderstand im "Brems"-Zustand zu drehen.

15. Anhänger, Karren, Transportwagen oder anderes, nicht motorisiertes Fahrzeug, welches normalerweise durch eine extern aufgebrachte Zugkraft angetrieben wird, mit einer Vorrichtung nach einem der vorhergehenden Ansprüche zum Manövrieren des Fahrzeugs durch einen wahlweise manuell gesteuerten Differentialantrieb zu den Rädern des Fahrzeugs.

## Revendications

1. Appareil pour déplacer une remorque comprenant une paire d'éléments moteurs (10) pour entraîner, respectivement, une roue côté conducteur et une roue côté passager de la remorque, chaque élément moteur étant porté par un support (21A, 23) qui est monté sur un bâti (30) fixé ou adapté pour être fixé à la remorque, et ayant un rouleau d'entraînement à friction (22) et un moteur électrique (20) pour entraîner le rouleau, l'appareil étant pourvu d'un système de commande électrique qui comprend une unité de commande à distance (60) au moyen de laquelle il peut être contrôlé pour mettre sous tension les moteurs (20) individuellement en polarités commune ou opposée, et un dispositif actionneur pouvant être contrôlé pour emmener les rouleaux d'entraînement à friction (22) dans ou en dehors d'un engrènement d'entraînement par friction avec des pneus installés sur les roues de la remorque, **caractérisé en ce que** les éléments moteurs sont pourvus, respectivement, de deux mécanismes (14) constituant ledit dispositif actionneur, chaque mécanisme pouvant être contrôlé pour déplacer le support associé (21A, 23) et avec lui l'élément moteur associé (10) relativement à son bâti (30) entre une position dans laquelle le mécanisme (14) tient le rouleau d'entraînement associé (22) hors de prise avec le pneu de la roue de remorque associée et une position dans laquelle il tient le rouleau d'entraînement en prise avec le pneu de la roue de remorque en exerçant une force entre une partie de son bâti fixe (30) et une partie de son support (21A, 23) qui sont disposés à côté d'une partie centrale du rouleau située entre ses extrémités, et le mécanisme (14) de chaque élément moteur comprend une bielle à arc-boutement (37, 38, 36) connectée de manière à fonctionner entre ledit support (21A, 23) de l'élément et le bâti fixe (30) de l'élément.

2. Appareil selon la revendication 1, dans lequel la remorque comprend un châssis, et chacune desdites roues ainsi que ledit dispositif actionneur sont disposés dans une position qui est vers l'extérieur du châssis.

3. Appareil selon la revendication 1 ou 2, dans lequel le bâti (30) de chaque élément moteur (10) comprend un agencement de support de pivot (32, 34), le support (21A, 23) et le mécanisme actionneur (14) de l'élément moteur étant connectés de manière pivotante à l'agencement de support de pivot et l'un à l'autre de telle sorte que le fonctionnement du mécanisme peut faire balancer l'élément d'entraînement à friction (22) généralement d'avant en arrière et le mouvement pivotant de l'agencement de support de pivot peut faire balancer l'élément d'entraînement à friction (22) généralement de haut en bas.

4. Appareil selon la revendication 1, 2 ou 3, dans lequel les bâtis pour les éléments moteurs (10) comprennent un élément transversal (30) qui a les éléments moteurs montés ou pouvant être montés sur ses extrémités respectives.

5. Appareil selon la revendication 4 lorsqu'elle dépend de la revendication 3, dans lequel chaque agencement de support de pivot comprend un premier support de pivot (32) et un deuxième support de pivot (34) décalé de manière arquée par rapport au premier support de pivot.

6. Appareil selon la revendication 5, dans lequel chaque élément moteur (10) a un sous-bâti (21A, 23) qui porte le moteur respectif (20), un réducteur (21) et le rouleau d'entraînement à friction (22) de l'élément, et qui est connecté de manière pivotante au premier support de pivot (32).

7. Appareil selon la revendication 5 ou 6, dans lequel le mécanisme (14) de chaque élément moteur comprend une bielle à arc-boutement (37, 38, 36) dont une partie d'extrémité (38, 36) est connectée de manière pivotante au sous-bâti (21A, 23) et dont l'autre partie d'extrémité (37) est connectée par une bielle pivotante au deuxième support de pivot (34).

8. Appareil selon la revendication 7, dans lequel une partie de la bielle à arc-boutement (37, 38, 36) est réglable en longueur.

9. Appareil selon l'une quelconque des revendications précédentes, dans lequel chaque élément moteur (10) est maintenu écarté de la roue de remorque associée par un ressort (28).

10. Appareil selon l'une quelconque des revendications 4 à 8, dans lequel l'élément transversal (30) est réglable en longueur pour modifier l'espacement des éléments moteurs (10).

11. Appareil selon l'une quelconque des revendications 4 à 8 ou la revendication 10, dans lequel des dispositifs de serrage (40) sont fournis pour fixer l'élément transversal (30) au châssis de la remorque.

12. Appareil selon l'une quelconque des revendications 4 à 8 ou revendication 10 ou 11, dans lequel les agencements de support de pivot (32, 34) sont fixés à l'élément transversal (30) pour pivoter avec celui-ci lorsque le dispositif de serrage (40) est desserré.

13. Appareil selon l'une quelconque des revendications précédentes, dans lequel chaque élément moteur (10) a un système de transmission pour transmettre l'entraînement provenant du moteur électrique (20) de l'élément au rouleau d'entraînement associé (22), ce système fournissant une condition de « frein » dans laquelle la transmission est effective mais le moteur est mis hors tension.

14. Appareil selon la revendication 13, dans lequel le système de transmission comprend un frein effectif dans la condition « frein », ou un engrenage à vis sans fin pour stopper le rouleau (22) ou pour permettre au rouleau de tourner extrêmement lentement contre une transmission et résistance moteur importantes dans la condition « frein ».

15. Remorque, carriole, chariot ou autre véhicule non motorisé normalement propulsé par une traction exercée de manière externe, ayant un appareil selon l'une quelconque des revendications précédentes pour la manoeuvre du véhicule par un entraînement différentiel, contrôlé manuellement, sélectif transmis aux roues du véhicule.
